Europäisches Patentamt

European Patent Office

Office européen des brevets

(19)

(11) Numéro de publication: **0 527 219 B1**

(12) **FASCICULE DE BREVET EUROPEEN**

(45) Date de publication de fascicule du brevet: **26.07.95** (51) Int. Cl.⁶: **B01J 29/06**

(21) Numéro de dépôt: **92907279.1**

(22) Date de dépôt: **27.02.92**

(86) Numéro de dépôt internationale :
**PCT/FR92/00178**

(87) Numéro de publication internationale :
**WO 92/15399 (17.09.92 92/24)**

(54) **CATALYSEUR D'HYDRORAFFINAGE RENFERMANT DU SULFURE DE RUTHENIUM, SA SYNTHESE ET PROCEDE D'HYDRORAFFINAGE METTANT EN UVRE LEDIT CATALYSEUR.**

(30) Priorité: **28.02.91 FR 9102404**

(43) Date de publication de la demande:
**17.02.93 Bulletin 93/07**

(45) Mention de la délivrance du brevet:
**26.07.95 Bulletin 95/30**

(84) Etats contractants désignés:
**BE DE GB IT NL**

(56) Documents cités:
**WO-A-86/01743**
**US-A- 3 197 398**

**Chemistry and Industry, 5 février 1977, (Letchworth, GB), B. COUGHLAN et al.: "Ruthenium zeolite hydrogenation catalysts", pages 125-127, voir page 126,alineas 1-2**

(73) Titulaire: **ELF FRANCE**
**Tour Elf**
**2, Place de la Coupole**
**LA DEFENSE 6 - 92400 Courbevoie (FR)**

(72) Inventeur: **BREYSSE, Michèle**
**15, rue Pierre-Bourgeois**
**F-69300 Caluire (FR)**
Inventeur: **CATTENOT, Martine**
**30, rue Léon-Fabre**
**F-69100 Villeurbanne (FR)**
Inventeur: **DES COURIERES, Thierry**
**152, boulevard Yves-Farge**
**F-69007 Lyon (FR)**
Inventeur: **GACHET, Christian**
**2, rue du Prieuré**
**F-69130 Ecully (FR)**
Inventeur: **PORTEFAIX, Jean-Louis**
**401, avenue du 8-Mai-1945**
**F-69300 Caluire (FR)**

(74) Mandataire: **Boillot, Marc**
**SOCIETE NATIONALE ELF AOUITAINE (PRO-DUCTION)**
**Dept. Propriété Industrielle**
**Tour Elf**
**F-92078 Paris la Défense Cédex 45 (FR)**

Rank Xerox (UK) Business Services
(3.10/3.09/3.3.3)

EP 0 527 219 B1

**Description**

L'invention concerne un catalyseur d'hydrodéazotation renfermant du sulfure de ruthénium, sa synthèse et son application à l'hydrodéazotation de charges hydrocarbonées.

Le pétrole et les fractions pétrolières obtenues par distillation ou traitement du pétrole sont des mélanges complexes où, à côté des hydrocarbures, se trouvent des composés renfermant des hétéroatomes, comme le soufre, l'azote et l'oxygène. Les charges lourdes, dont l'utilisation se généralise, contiennent des quantités importantes de composés hétéroatomiques. Ces charges lourdes sont constituées par exemple de bruts lourds, de schistes bitumineux ou de résidus lourds de raffineries de pétrole.

Les composés hétéroatomiques sont des impuretés nuisibles à la bonne qualité des produits pétroliers. Ils sont notamment responsables des problèmes liés à la pollution, à la corrosion, à l'odeur et à la stabilité. Les composés soufrés et azotés peuvent également empoisonner les catalyseurs usuels des procédés de raffinage.

Il est donc important de les éliminer au cours du raffinage. Il s'agit en général d'un traitement à l'hydrogène, en présence d'un catalyseur qui favorise la rupture des liaisons carbone-hétéroatome. Ce traitement est appelé hydroraffinage.

Les principales réactions d'hydroraffinage sont la désulfuration et la désazotation. La désulfuration consiste à transformer le soufre contenu dans les composés organiques en hydrogène sulfuré. La désazotation consiste à transformer l'azote des composés organiques en ammoniac.

Un effort de recherche considérable a été déployé pour trouver des catalyseurs d'hydroraffinage efficaces, résistants à la désactivation par les hétéroatomes.

Les catalyseurs d'hydroraffinage les plus couramment utilisés sont à base de nickel, de molybdène, de tungstène ou de cobalt. Ces métaux sont déposés sur des supports par imprégnation à l'aide de leurs sels hydrosolubles, puis transformés en sulfures.

Les supports sont en général à base d'oxydes réfractaires, comme l'alumine ou les silice-alumines.

L'utilisation de supports zéolithiques a été également étudiée.

La structure cristalline des zéolithes est composée de tétraèdres de AlO4 et de SiO4, reliés entre eux par des atomes d'oxygène communs à deux tétraèdres. La charpente tridimensionnelle formée par l'assemblage de ces tétraèdres présente des cavités et canaux qui accueillent les cations compensant le déficit de charge lié à la présence de l'aluminium trivalent dans les tétraèdres AlO4. Préalablement à la préparation de catalyseurs, ces cations compensateurs sont échangés par des ions hydrogènes.

Les formes catalytiquement actives sont obtenues par introduction de mémtaux à effet catalytique dans cette forme acide.

Le brevet américain 4 324 647, de PHILLIPS Petroleum décrit par exemple un procédé d'hydrocraquage, d'hydrodésulfuration et d'hydrodéazotation par un catalyseur à base de zéolithe Y. Cette zéolithe est utilisée sous forme acide. Sa concentration en sodium est de préférence au-dessous de 0,2% poids.

La demande de brevet PCT WO 86/01743 suggère d'associer aux catalyseurs classiques d'hydrotraitement bimétalliques sur alumine, une zéolithe Y renfermant de préférence 0,5 à 3% poids de ruthénium. Là encore, la zéolithe est utilisée sous forme acide.

La demande de brevet US 3197398 suggère comme catalyseur d'hydroconversion et notamment d'hydrocraquage un catalyseur obtenu à partir d'une zéolithe Y traitée par imprégnation d'un métal du groupe VIII sulfuré suivie ou précédée par un échange d'ions à partir d'un sel métallique du même métal, la zéolithe Y se présentant encore sous forme acide.

Nous avons trouvé de façon surprenante que l'utilisation de catalyseurs renfermant du ruthénium sur zéolithe non-acide permet d'améliorer les performances du catalyseur en désulfuration et surtout en déazotation.

Cette invention concerne un catalyseur d'hydrodéazotation de charges hydrocarbonées obtenu à partir d'une zéolithe renfermant du sulfure de ruthénium caractérisé en ce que la zéolithe est sous forme non-acide.

Nous entendons par zéolithe non-acide une zéolithe dont les sites acides sont pratiquement tous neutralisés par un métal.

Il peut s'agir de ruthénium seul mais en général la zéolithe renferme également un autre métal, en général un métal alcalin, comme le lithium, le sodium, le potassium le rubidium ou le césium. On utilise de préférence la forme potassique, facilement accessible à partir de matières premières peu onéreuses et dont l'acidité est très faible.

La désalumination diminue fortement l'acidité de la zéolithe, puisque l'acidité est liée à la présence d'aluminium trivalent. Il est donc avantageux d'utiliser les zéolithes sous forme désaluminée.

L'acidité des supports zéolithiques a été mesurée par thermodésorption d'ammoniac par paliers.

Un échantillon de catalyseur préalablement traité sous hélium à 500°C, puis refroidi à la température d'adsorption, est empoisonné par l'ammoniac. Après une purge sous vide, la température est élevée par paliers de 50°C. L'ammoniac désorbé est alors entraîné par l'hélium vers un détecteur catharométrique. La quantité totale d'ammoniac est recueillie dans un flacon d'acide sulfurique qui sera ensuite dosé par la soude. L'enregistrement des pics de désorption permet de tracer l'histogramme des quantités d'ammoniac désorbé au cours des différents paliers et ainsi d'estimer la distribution des forces acides.

L'acidité forte correspond aux sites qui désorbent à partir de 350°C. Dans ces conditions, l'acidité forte, exprimée en milliéquivalent de $H^+$ par gramme de catalyseur, passe de 0,04 pour une zéolithe Y potassique ayant un rapport atomique Si/Al de 2,5 à moins de 0,01 pour une zéolithe Y potassique ayant un rapport Si/Al de 5,9. La forme désaluminée ne présente donc pratiquement pas de sites acides forts.

Selon l'invention on utilise de préférence des zéolithes dont l'acidité forte est inférieure à 0,1 milliéquivalent de $H^+$ par gramme de catalyseur.

Les zéolithes utilisées sont d'origine naturelle ou synthétique. Elles sont choisies en particulier parmi les zéolithes ayant des pores dont le diamètre est supérieur ou égal à 0,5nm.

Parmi ces zéolithes, on peut mentionner la zéolithe bêta, l'offretite, la mordénite et la MFI.

On utilise de préférence des zéolithes de la famille de la faujasite et particulièrement la zéolithe Y.

La zéolithe Y est une zéolithe synthétique dont la synthèse est décrite dans un brevet américain de UNION CARBIDE (US 4 130 007).

La zéolithe Y, comme toutes les zéolithes de la famille structurale de la faujasite, possède des canaux interconnectés d'environ 0,8 nm de diamètre. Elle convient donc par la taille de ses canaux pour la réaction des molécules encombrantes rencontrées en pétrochimie.

La zéolithe Y est obtenue par cristallisation hydrothermale de gels d'aluminosilicates sodiques. Elle répond à la formule générale exprimée en mole oxydes :

$0,9 \pm 0,2$ $Na_2O$ : $Al_2O_3$ : w $SiO_2$ : $xH_2O$ où x est en général au dessous de 9 et w est compris entre 3 et 6. w est en général égal à 5, ce qui correspond à un rapport atomique Si/Al de 2,5. Ce rapport peut être augmenté par désalumination.

La zéolithe Y est obtenue par synthèse sous forme de sel sodique.

La forme potassique de la zéolithe Y est obtenue par échange de la forme sodique ou de la forme acide avec un sel de potassium, comme le nitrate de potassium.

Le catalyseur préféré selon l'invention est une zéolithe Y renfermant du sulfure de ruthénium et du potassium. On utilise avantageusement la zéolithe Y sous forme désaluminée.

Le rapport atomique Si/Al de la zéolithe Y désaluminée est supérieur ou égal à 3. Il est compris de préférence entre 3 et 10.

On introduit en général entre 0,5 et 20% poids de ruthénium dans la zéolithe. Cette quantité est en général comprise entre 1 et 5% et de préférence entre 1,5 et 3% poids.

Les zéolithes non-acides renfermant du sulfure de ruthénium peuvent être utilisées seules comme catalyseurs d'hydrodéazotation mais il est beaucoup plus avantageux de les utiliser en association avec des catalyseurs classiques d'hydroraffinage.

Il s'agit en général de catalyseurs à base d'alumine renfermant des métaux comme le nickel, le molybdène, le tungstène ou le cobalt. Le solide catalytique renferme entre 5 et 90% en poids, de préférence entre 10 et 60% ou mieux entre 15 et 60% de zéolithe.

Pour la synthèse des catalyseurs selon l'invention on utilise de préférence les zéolithes sous forme non-acide. Il s'agit en général de zéolithes renfermant des métaux alcalins.

On utilise de préférence la forme potassique, facilement accessible à partir de matières premières peu onéreuses et dont l'acidité est très faible.

Lors de la synthèse des catalyseurs, une partie ou la totalité du métal alcalin de la zéolithe est échangée par le ruthénium par imprégnation de la zéolithe par une solution aqueuse ou organique d'un sel de ruthénium. Le trichlorure de ruthénium et l'hexaaminoruthénium sont utilisés sous forme de solutions aqueuses, le dodécacarbonyl ruthénium est utilisé sous forme de solution dans le benzène.

La zéolithe est imprégnée par exemple par une solution aqueuse diluée de Ru $(NH_3)_6$ pendant plusieurs jours à température ambiante. Le solide obtenu est lavé à l'eau, puis séché. Les catalyseurs sont ensuite sulfurés par un mélange gazeux renfermant de l'hydrogène sulfuré.

En général il s'agit de mélange de l'hydrogène sulfuré avec de l'hydrogène ou de l'azote. La sulfuration a lieu en général dans le réacteur d'hydroraffinage.

Si les zéolithes sont utilisées en mélange avec un catalyseur d'hydroraffinage classique, en général à base d'alumine, on réalise un mélange physique de la zéolithe et de l'alumine.

La zéolithe et l'alumine sont broyées et les poudres tamisées et séchées sont mélangées dans un mélangeur à poudres.

3

Les catalyseurs renfermant du sulfure de ruthénium sur zéolithe non-acide peuvent être utilisés seuls ou en mélange avec des catalyseurs classiques à base d'alumine, pour toutes les réactions d'hydroraffinage.

Ils sont cependant particulièrement efficaces pour les réactions d'hydrodésazotation. Les mélanges renfermant des zéolithes non-acides au sulfure de ruthénium et des catalyseurs d'hydroraffinage classiques ont la propriété remarquable que leur action d'hydrodésazotation n'est pas inhibée par la présence de quinoléines.

Il est connu que les catalyseurs commerciaux réalisent assez facilement la transformation des quinoléines en alkyl-anilines, mais ces dernières, bien que facilement désazotées lorsqu'elles sont pures, sont très peu converties en présence de quinoléines. Il se produit donc une accumulation d'alkylanilines dans les charges, ce qui constitue actuellement l'une des principales limitations des rendements en désazotation obtenus en raffinerie.

Les mélanges de zéolithes non-acides au sulfure de ruthénium et de catalyseurs classiques, par exemple au nickel-molybdène sur alumine, sont très peu inhibés par la présence de la quinoléine. Leur effet catalytique sur la désazotation d'une alkylaniline comme la diéthylaniline, ne diminue que très légèrement en présence de quinoléine. Ceci reste vrai même dans des conditions opératoires douces.

Les conditions opératoires de mise en oeuvre des catalyseurs selon l'invention sont celles utilisées habituellement dans les procédés d'hydroraffinage. La température est comprise entre 250 et 500 °C.

La vitesse spatiale liquide de la charge exprimée en $m^3$ de charge liquide par heure et par $m^3$ de catalyseur est généralement comprise entre 0,2 et $6h^{-1}$.

La pression totale est en général comprise entre 1 et 80 bars.

Les exemples suivants illustrent l'invention sans toutefois la limiter.

EXEMPLE 1 :

50g de zéolithe Y au sodium (NaY) fournie par UNION CARBIDE (Type LZ-Y52) est soumise à trois échanges successifs dans un litre d'une solution aqueuse contenant 1 mole par litre de $KNO_3$ à 60 °C pendant 24 heures. Entre chaque échange, le solide est lavé par cette solution.

Après le dernier échange, il est lavé trois fois à l'eau permutée, puis séché 18 heures à 120 °C sous air.

5g de cette zéolithe sont échangés par 0,5g de Ru $(NH_3)_6$ $Cl_3$ (JOHNSON-MATTHEY) dissous dans 0,51 d'eau déionisée, pendant 48heures à 20 °C. Après échange, le solide est lavé trois fois à l'eau déionisée, puis séché sous air 18heures à 120 °C.

La zéolithe (RuKY) obtenue renferme 2,3% poids de ruthénium. Le rapport atomique Si/Al est de 2,5.

EXEMPLE 2

Une zéolithe HY désaluminée est fournie par CONTEKA (référence CBV 712)

| | |
|---|---|
| $SiO_2/Al_2O_3$ (% molaire) | 12 |
| $Na_2O$(% poids) | 0,1 |
| maille élémentaire (nm) | 240,35 |
| aire spécifique ($m^2g^{-1}$) | 700 |
| Si/Al (atomique) | 6 |

Cette zéolithe est calcinée sous oxygène suivant le protocole ci-après :
- montée à 200 °C en 3 heures
- palier de 2 heures à 200 °C
- montée à 530 °C en 12 heures
- palier de 4 heures à 530 °C

5g de cette zéolithe HY calcinée sont échangés trois fois dans 500ml d'une solution aqueuse de 1M $KNO_3$ pendant 24 heures à 55 °C. Entre chaque échange, les solides sont lavés par la solution de $KNO_3$.

Après trois derniers lavages à l'eau, ils sont séchés 18 heures à 120 °C.

5g de cette zéolithe sont échangés par 0,5g de Ru$(NH_3)_6$ $Cl_3$ de JOHNSON-MATTHEY, dissous dans 0,5 l d'eau déionisée, pendant 48 heures à 20 °C. Après échange, le solide est lavé trois fois à l'eau déionisée, puis séché sous air 18 heures à 120 °C.

La zéolithe (RuKYd) obtenue renferme 1,8% en poids de ruthénium. Le rapport atomique Si/Al est de 5,9.

4

EXEMPLE 3

5g de zéolithe NaY fournie par UNION CARBIDE (Type LZ-Y52) sont échangés par 0,5g de Ru $(NH_3)_6Cl_3$ - (JOHNSON-MATTHEY) dissous dans 0,5 l d'eau déionisée, pendant 48 h à 20°C. Après échange, le solide est lavé trois fois à l'eau déionisée, puis séché sous air 18 h à 120°C.

La zéolithe (RuNaY) obtenue renferme 2,6% poids de ruthénium. Le rapport atomique Si/Al est de 2,5.

EXEMPLE 4 (comparatif)

50g de zéolithe Y au sodium (NaY) fournie par UNION CARBIDE sont soumis à deux échanges successifs dans 1 litre d'une solution aqueuse contenant 1 mole par litre de $NH_4Cl$, à 20°C pendant 24 h. Entre chaque échange, le solide est lavé par cette solution. Après le dernier échange, il est lavé trois fois à l'eau permutée, puis séché 18 h à 120°C sous air. Cette zéolithe est calcinée sous oxygène à 530°C suivant le protocole décrit dans l'exemple 1.

5g de cette zéolithe sont échangés par 0,5g de Ru $(NH_3)_6$ $Cl_3$ (JOHNSON-MATTHEY) dissous dans 0,5 l d'eau déionisée, pendant 48 h à 20°C. Après échange, le solide est lavé trois fois à l'eau déionisée, puis séché sous air 18 h à 120°C.

La zéolithe obtenue renferme 2,3% poids de ruthénium. Le rapport atomique Si/Al est de 2,5.

EXEMPLE 5 (comparatif)

2g d'alumine GFS-200 (PROCATALYSE) broyée, tamisée (fraction 0,080mm - 0,125 mm) et séchée sous vide 18 heures à 110°C sont imprégnés sans excès de solution par 0,1828g de $RuCl_3$, $3H_2O$ (JOHNSON-MATTHEY) en solution aqueuse. Le solide est ensuite séché sous air 18 heures à 120°C.

L'alumine obtenue renferme 2,5% poids de ruthénium.

EXEMPLE 6

Nous avons mesuré l'activité des catalyseurs des exemples 1 à 5 dans la réaction d'hydrogénation (HN) de la pyridine et d'hydrodésazotation (HDN) de la pipéridine.

Nous avons comparé leur activité avec celle d'un catalyseur commercial HR-346 de PROCATALYSE. Ce catalyseur contient du nickel-molybdène sur alumine.

Les catalyseurs des exemples 1 à 5 ont été sulfurés 4heures à 400°C sous $N_2/H_2S$ renfermant 15% d'$H_2S$. Le catalyseur HR-346 a été sulfuré 4 h à 400°C sous $H_2/H_2S$ renfermant 15% d'$H_2S$.

Les conditions réactionnelles sont les suivantes :

Pression total = 30 bars

Pression partielle des réactifs = 26,6KPa

Pression partielle d'$H_2S$ = 66,6KPa

Température de réaction = 300°C.

L'activité exprimée en vitesse intrinsèque (Vi = $10^{-4}$ molec. $s^{-1}$ (at.métal)$^{-1}$) correspond à l'activité par gramme de métal déposé sur le catalyseur.

Les résultats figurent dans le tableau I. Les catalyseurs les plus actifs sont RuKYd et RuKY dont l'acidité est la plus faible.

TABLEAU I

| Catalyseur | Vi HN pyridine | Vi HDN pipéridine |
|---|---|---|
| EX. 1 | 61 | 34 |
| 2 | 140 | 38 |
| 3 | 72 | 28 |
| 4 (comparatif) | 52 | 19 |
| 5 (comparatif) | 28 | 24 |
| HR-346 | 17 | 18 |

EXEMPLE 7

Nous avons comparé l'activité des catalyseurs préparés selon les exemples 1,2,3,4 et 5 à l'activité des catalyseurs commerciaux et l'activité des mélanges équipondéraux des catalyseurs 1,2,3,4 et 5 avec des catalyseurs commerciaux, dans la réaction d'hydrogénation de la pyridine.

Les catalyseurs 1,2,3,4 et 5 sont mélangés physiquement en proportion équipondérale avec des catalyseurs commerciaux fournis par PROCATALYSE :
- Nickel-Molybdène/Alumine (HR 346)
- Cobalt-Molybdène/Alumine (HR 306)

Les mélanges sont réalisés dans un mélangeur de poudres TURBULA, après broyage, tamisage (fraction 0,040mm-0,080mm) et séchage des poudres.

Les catalyseurs ont été sulfurés par un mélange $N_2/H_2S$ à 15% d'$H_2S$.

Les conditions réactionnelles de l'hydrogénation de la pyridine sont les suivantes :
- Pression totale = 30 bars
- Pression partielle de la pyridine = 26,6KPa
- Pression partielle d'$H_2S$ = 66,6KPa
- Température de réaction = 300°C.

Nous observons un effet de synergie avec les mélanges renfermant les zéolithes des exemples 1 à 3 et des catalyseurs commerciaux aussi bien à base de nickel-molybdène que de cobalt-molybdène sur alumine. Le RuHY (EX.4) et le ruthénium sur alumine (EX.5) ne présentent pas d'effet de synergie.

L'activité des catalyseurs est exprimée par la vitesse spécifique de la réaction d'hydrogénation. La vitesse spécifique ($Vs = 10^{-8}$ mol $s^{-1}$ $g^{-1}$) correspond à l'activité par gramme de catalyseur.

Les résultats figurent dans le tableau 2.

TABLEAU 2

| Catalyseurs | $V_S$ |
|---|---|
| HR 346 | 115 |
| HR 306 | 95 |
| EX. 1 | 165 |
| EX.1 + HR 346 | 180 |
| EX.1 + HR 306 | 170 |
| EX.2 | 240 |
| EX.2 + HR 346 | 230 |
| EX.3 | 190 |
| EX.3 + HR 346 | 188 |
| EX.4 | 110 |
| EX.4 + HR 346 | 115 |
| EX.5 | 75 |
| EX.5 + HR 346 | 95 |

EXEMPLE 8

Nous avons comparé l'activité des catalyseurs 1,2,4 et d'un catalyseur commercial, utilisés seuls, à l'activité des mélanges renfermant les catalyseurs 1,2,4 et un catalyseur commercial en quantité équipondérale. La réaction étudiée est l'hydrodésazotation de la diéthylaniline, seule ou en mélange avec la quinoléine.

Le catalyseur commercial est fourni par PROCATALYSE :
- Nickel-Molybdène/alumine dopée (HR348)

Nous résumons dans la tableau 4 les conditions opératoires à 30 et 60 bars.

TABLEAU 4

| Paramètres | Pression Totale | |
|---|---|---|
| | 60 bars | 30 bars |
| Pression DEA | 0,040 bar | 0,020 bar |
| Pression $H_2S$ | 1,2 bar | 0,6 bar |
| Débit total | $1001h^{-1}$ | $501h^{-1}$ |
| Température | 350°C | 350°C |
| Masse cata. | 0,5 g | 0,5 g |
| Solvant | n-$C_7$ | n-$C_7$ |
| Agent sulfurant | DMDS | DMDS |

Nous avons mesuré la conversion (C) et la vitesse de la réaction en mmol $h^{-1}$ $g^{-1}$ pour la diéthylaniline (DEA) seule ($V_o$) et en présence de 10% ($V_{10}$) puis de 30% ($V_{30}$) de quinoléine (Q).

Il apparait clairement que l'inhibition par la quinoléine est fortement diminuée en présence des mélanges des catalyseurs 1 et 2 avec des catalyseurs commerciaux, alors que le mélange du catalyseur 4 avec des catalyseurs commerciaux n'améliore pas l'activité de ces derniers.

Nous résumons dans le tableau 5 les conversions d'hydrodésazotation de la DEA et dans le tableau 6 les vitesses de réaction exprimées en mmol $h^{-1}$ $g^{-1}$ à 60 bars.

Dans le tableau 7 figurent les mêmes données à 30 bars. Les propriétés de ces catalyseurs sont conservées lorsque la pression diminue.

TABLEAU 5

| | Conversion DEA (%) | | |
|---|---|---|---|
| Catalyseur | DEA pure | DEA + 10% Q | DEA + 30% Q |
| HR 348 | 90,8 | 52,5 | 18,5 |
| EX. 1 | 60 | 25 | 17 |
| EX. 2 | 100 | 20,6 | 10,5 |
| EX. 4 | 56 | 10,3 | 5,4 |
| EX.1 + HR 348 | 99,6 | 72,9 | 46,4 |
| EX.2 + HR 348 | 100 | 84,5 | 59,2 |
| EX.4 + HR 348 | 100 | 48,0 | 29,2 |

TABLEAU 6

| Catalyseur | DEA pure | DEA + 10 % Q | | DEA + 30 % Q | |
|---|---|---|---|---|---|
| $V_O$ | $V_{10}$ | $V_O/V_{10}$ | $V_{30}$ | $V_O/V_{30}$ | |
| HR 348 | 5,6 | 3,3 | 1,7 | 1,7 | 4,9 |
| EX. 1 | 3,7 | 1,6 | 2,4 | 1,1 | 3,5 |
| EX. 2 | 6,2 | 1,3 | 4,9 | 0,7 | 9,5 |
| EX. 4 | 3,5 | 0,6 | 5,4 | 0,3 | 10,4 |
| EX.1 + HR 348 | 6,1 | 4,5 | 1,4 | 2,9 | 2,1 |
| EX.2 + HR 348 | 6,2 | 5,2 | 1,2 | 3,7 | 1,7 |
| EX.4 + HR 348 | 6,2 | 3,0 | 2,1 | 1,7 | 3,4 |

TABLEAU 7

| Catalyseur | DEA pure | | DEA + 10 % | | | DEA + 30 % | | |
|---|---|---|---|---|---|---|---|---|
| | C% | $V_O$ | C% | $V_{10}$ | $V_0/V_{10}$ | C% | $V_{30}$ | $V_0/V_{30}$ |
| HR 348 | 28 | 2,4 | 25,7 | 0,77 | 3,2 | 8,5 | 0,26 | 9,5 |
| EX.1 + HR348 | 71 | 2,1 | 32,2 | 0,97 | 2,2 | 18,6 | 0,56 | 3,8 |
| EX.2 + HR348 | 100 | 3,1 | 53,5 | 1,60 | 1,9 | 30,0 | 0,90 | 3,3 |

**Revendications**

1.  Catalyseur d'hydrodéazotation de charges hydrocarbonées comprenant une zéolithe renfermant du sulfure de ruthénium caractérisé en ce que la zéolithe est sous une forme non acide telle que son acidité forte est inférieure ou égale à 0,1 milliéquivalent de $H^+$ par gramme de catalyseur.

2.  Catalyseur selon la revendication 1 caractérisé en ce que la zéolithe renferme du sulfure de ruthénium et au moins un second métal.

3.  Catalyseur selon la revendication 2 caractérisé en ce que le second métal est un métal alcalin comme le lithium, le sodium, le potassium, le rubidium ou le césium.

4.  Catalyseur selon la revendication 3 caractérise en ce que le métal alcalin est le potassium.

5.  Catalyseur selon l'une des revendications 1 à 4 caractérisé en ce que la zéolithe est utilisée sous forme désaluminée.

6.  Catalyseur selon l'une des revendications 1 à 5 caractérisé en ce que la zéolithe est choisie parmi les zéolithes ayant des pores de diamètre supérieur ou égal à 0,5 nm.

7.  Catalyseur selon l'une des revendications 1 à 6 caractérisé en ce que la zéolithe est la faujasite X ou Y, la zéolithe oméga, la zéolithe bêta, l'offretite, la mordénite ou le MFI.

8.  Catalyseur selon l'une des revendications 1 à 7 caractérisé en ce que la zéolithe est de la famille de la faujasite.

9.  Catalyseur selon la revendication 8 caractérisé en ce que la zéolithe est la zéolithe Y.

10. Catalyseur selon la revendication 9 caractérisé en ce que la zéolithe est la zéolithe Y renfermant du sulfure de ruthénium et du potassium.

11. Catalyseur selon la revendication 10 caractérisé en ce que la zéolithe est la zéolithe Y désaluminée renfermant du sulfure de ruthénium et du potassium.

12. Catalyseur selon la revendication 11 caractérisé en ce que le rapport atomique silicium/aluminium est supérieur ou égal à 3 et compris de préférence entre 3 et 10.

13. Catalyseur selon l'une des revendications 1 à 12 caractérisé en ce qu'il renferme 0,5 à 20 % poids de ruthénium.

14. Catalyseur selon la revendication 13 caractérisé en ce qu'il renferme 1 à 5 % poids et de préférence 1,5 à 3 % poids de ruthénium.

15. Catalyseur selon l'une des revendications 1 à 14 caractérisé en ce qu'il contient en outre de l'alumine renfermant des métaux comme le nickel, le molybdène, le cobalt et le tungstène.

**16.** Catalyseur selon la revendication 15 caractérisé en ce qu'il renferme 5 à 90 % poids et de préférence entre 10 et 60 % poids de zéolithe.

**17.** Catalyseur selon la revendication 16 caractérisé en ce qu'il renferme entre 15 à 60 % poids de zéolithe.

**18.** Procédé de synthèse d'un catalyseur selon l'une des revendications 1 à 17 caractérisé en ce la forme alcaline et de préférence la forme potassique de la zéolithe est soumise à un échange cationique partiel ou total du ruthénium, par imprégnation de la zéolithe avec une solution aqueuse ou organique d'un sel de ruthénium, puis la zéolithe seule ou en mélange avec de l'alumine renfermant des métaux comme le nickel, le molybdène, le cobalt et le tungstène, est soumise à une sulfuration avec un mélange gazeux renfermant de l'hydrogène sulfuré.

**19.** Application du catalyseur selon les revendications 1 à 18 à l'hydrodéazotation des charges pétrolières.

**Claims**

**1.** Catalyst for the hydrodenitrification of hydrocarbon-containing charges comprising a zeolite containing ruthenium sulphide, characterised in that the zeolite is in a non-acidic form such that its strong acidity is less than or equal to 0.1 milliequivalent of $H^+$ per gram of catalyst.

**2.** Catalyst according to Claim 1, characterised in that the zeolite contains ruthenium sulphide and at least a second metal.

**3.** Catalyst according to Claim 2, characterised in that the second metal is an alkali metal such as lithium, sodium, potassium, rubidium or caesium.

**4.** Catalyst according to Claim 3, characterised in that the alkali metal is potassium.

**5.** Catalyst according to any one of Claims 1 to 4, characterised in that the zeolite is used in dealuminised form.

**6.** Catalyst according to any one of Claims 1 to 5, characterised in that the zeolite is selected from zeolites having pore diameters greater than or equal to 0.5 nm.

**7.** Catalyst according to any one of Claims 1 to 6, characterised in that the zeolite is faujasite X or Y, omega zeolite, beta zeolite, offretite, mordenite or MFI.

**8.** Catalyst according to any one of Claims 1 to 7, characterised in that the zeolite is from the faujasite family.

**9.** Catalyst according to Claim 8, characterised in that the zeolite is zeolite Y.

**10.** Catalyst according to Claim 9, characterised in that the zeolite is zeolite Y containing ruthenium sulphide or potassium.

**11.** Catalyst according to Claim 10, characterised in that the zeolite is dealuminised zeolite Y containing ruthenium sulphide or potassium.

**12.** Catalyst according to Claim 11, characterised in that the silicon/aluminium atomic ratio is greater than or equal to 3 and is preferably from 3 to 10.

**13.** Catalyst according to any one of Claims 1 to 12, characterised in that it contains from 0.5 to 20 % by weight of ruthenium.

**14.** Catalyst according to Claim 13, characterised in that it contains from 1 to 5 % by weight and preferably from 1.5 to 3 % by weight of ruthenium.

**15.** Catalyst according to any one of Claims 1 to 14, characterised in that it also contains alumina containing metals such as nickel, molybdenum, cobalt and tungsten.

**16.** Catalyst according to Claim 15, characterised in that it contains from 5 to 90 % by weight and preferably from 10 to 60 % by weight of zeolite.

**17.** Catalyst according to Claim 16, characterised in that it contains from 15 to 60 % by weight of zeolite.

**18.** Process for the synthesis of a catalyst according to any one of Claims 1 to 17, characterised in that the alkaline form and preferably the potassium form of the zeolite is subjected to a partial or complete cationic exchange of the ruthenium by impregnating the zeolite with an aqueous or organic solution of a ruthenium salt, and then the zeolite, alone or in admixture with alumina containing metals such as nickel, molybdenum, cobalt and tungsten, is subjected to sulphuration with a gaseous mixture containing hydrogen sulphide.

**19.** Use of the catalyst according to Claims 1 to 18 in the hydrodenitrification of petroleum charges.

**Patentansprüche**

**1.** Katalysator für die Hydrodenitrierung von Kohlenwasserstofffraktionen, der einen Zeolithen umfaßt, welcher Rutheniumsulfid enthält, dadurch **gekennzeichnet,** daß der Zeolith in nichtsaurer Form vorliegt, so daß seine starke Acidität unter 0,1 Milliäquivalent $H^+$ pro Gramm Katalysator liegt oder diesem Wert entspricht.

**2.** Katalysator nach Anspruch 1, dadurch **gekennzeichnet,** daß der Zeolith Rutheniumsulfid und wenigstens ein zweites Metall enthält.

**3.** Katalysator nach Anspruch 2, dadurch **gekennzeichnet,** daß das zweite Metall ein Alkalimetall wie Lithium, Natrium, Kalium, Rubidium oder Cäsium ist.

**4.** Katalysator nach Anspruch 3, dadurch **gekennzeichnet,** daß das Alkalimetall Kalium ist.

**5.** Katalysator nach einem der Ansprüche 1 bis 4, dadurch **gekennzeichnet,** daß der Zeolith in entaluminierter Form verwendet wird.

**6.** Katalysator nach einem der Ansprüche 1 bis 5, dadurch **gekennzeichnet,** daß der Zeolith ausgewählt wird unter Zeolithen mit einem Porendurchmesser von 0,5 nm oder darüber.

**7.** Katalysator nach einem der Ansprüche 1 bis 6, dadurch **gekennzeichnet,** daß der Zeolith Faujasit X oder Y, $\omega$-Zeolith, $\beta$-Zeolith, Offretit, Mordenit oder MFI ist.

**8.** Katalysator nach einem der Ansprüche 1 bis 7, dadurch **gekennzeichnet,** daß der Zeolith ein Vertreter der Faujasitgruppe ist.

**9.** Katalysator nach Anspruch 8, dadurch **gekennzeichnet,** daß der Zeolith Zeolith Y ist.

**10.** Katalysator nach Anspruch 9, dadurch **gekennzeichnet,** daß der Zeolith Ruthenium- und Kaliumsulfid enthaltender Zeolith Y ist.

**11.** Katalysator nach Anspruch 10, dadurch **gekennzeichnet,** daß der Zeolith entaluminierter, Ruthenium- oder Kaliumsulfat enthaltender Zeolith Y ist.

**12.** Katalysator nach Anspruch 11, dadurch **gekennzeichnet,** daß das Atomverhältnis von Silicium zu Aluminium 3 beträgt oder darüber liegt und vorzugsweise zwischen 3 und 10 liegt.

**13.** Katalysator nach einem der Ansprüche 1 bis 12, dadurch **gekennzeichnet,** daß er 0,5 bis 20 Gew.-% Ruthenium enthält.

**14.** Katalysator nach Anspruch 13, dadurch **gekennzeichnet,** daß er 1 bis 5 Gew.-% und vorzugsweise 1,5 bis 3 Gew.-% Ruthenium enthält.

**15.** Katalysator nach einem der Ansprüche 1 bis 14, dadurch **gekennzeichnet,** daß er außerdem Tonerde enthält, die ihrerseits Metalle wie Nickel, Molybdän, Kobalt und Wolfram enthält.

**16.** Katalysator nach Anspruch 15, dadurch **gekennzeichnet,** daß er 5 bis 90 Gew.-% und vorzugsweise 10 bis 60 Gew.-% Zeolith enthält.

**17.** Katalysator nach Anspruch 16, dadurch **gekennzeichnet,** daß er 15 bis 60 Gew.-% Zeolith enthält.

**18.** Verfahren zur Synthese eines Katalysators nach einem der Ansprüche 1 bis 17, dadurch **gekennzeichnet,** daß die alkalische Form, vorzugsweise die Kaliform, des Zeolithen einem teilweisen oder vollständigen Kationenaustausch gegen Ruthenium durch Tränken des Zeolithen mit einer wässerigen oder organischen Lösung eines Rutheniumsalzes unterworfen wird und dann der Zeolith als solcher oder im Gemisch mit Tonerde, die Metalle wie Nickel, Molybdän, Kobalt und Wolfram enthält, mit einem Schwefelwasserstoff enthaltenden Gasgemisch geschwefelt wird.

**19.** Verwendung des Katalysators nach den Ansprüchen 1 bis 18 für die Hydrodenitrierung von Erdölfraktionen.